# DEMANDE DE BREVET EUROPEEN

(11) **EP 2 685 120 A1**
(43) Date de publication de la demande: **15.01.2014**
(21) Numéro de dépôt: 13175189.3
(22) Date de dépôt: 04.07.2013
(51) Int. Cl.: F16D 3/52, F16D 3/54

(54) **Module de liaison, accouplement et procédé correspondants**

(30) Priorité: 09.07.2012 FR 1256603
(71) Demandeur: Compagnie Engrenages et Reducteurs-Messian-Durand, 59400 Cambrai (FR)
(72) Inventeur: Lessard, Fabrice, 59400 CAMBRAI (FR)
(74) Mandataire: Domenego, Bertrand

(57) **Abrégé**

Ce module de liaison (8) comprend une pluralité de barres de liaison (18) adaptées pour relier deux moyeux d'accouplement, et de la graisse (24) adaptée pour graisser la liaison entre la pluralité de barres de liaison (18) et les moyeux d'accouplement. Le module de liaison (8) comprend un emballage (26) ayant une enveloppe entourant, d'une manière étanche à la graisse et notamment en l'absence des moyeux d'accouplement et/ou d'un couvercle, les barres de liaison et la graisse.

## Description

La présente invention concerne un module de liaison, du type comprenant une pluralité de barres de liaison adaptées pour relier deux moyeux d'accouplement, de la graisse adaptée pour graisser la liaison entre la pluralité de barres de liaison et les moyeux d'accouplement.

On connaît des accouplements à ressorts métalliques comprenant deux moyeux qui sont reliés en rotation par des éléments ressorts.

Les éléments ressorts sont introduits dans des évidements des moyeux. Ensuite, de la graisse est appliquée sur les éléments ressorts et les moyeux. Un couvercle est disposé par-dessus les éléments ressort, les moyeux et la graisse et est fixé aux moyeux.

Cet accouplement présente plusieurs inconvénients. La graisse étant appliquée après les éléments ressorts et indépendamment de ceux-ci, la quantité de graisse appliquée dépend de l'opérateur et n'est pas définie. Egalement, la répartition de la graisse n'est pas définie et la qualité de graissage dépend de l'opérateur. Par ailleurs, le type de graisse peut être échangé par rapport au type de graisse nécessaire et il est donc possible d'utiliser un mauvais type de graisse.

De plus, la logistique et la manutention sont compliquées étant donné que les éléments ressorts et la graisse doivent être stockés et commandés séparément.

Enfin, l'opération de montage et de graissage est consommatrice de temps.

L'invention a pour objet de pallier à au moins un de ces inconvénients.

A cet effet, l'invention a pour objet un module du type indiqué ci-dessus **caractérisé en ce que** le module de liaison comprend un emballage qui est muni d'une enveloppe entourant d'une manière étanche à la graisse, notamment en l'absence des moyeux d'accouplement et/ou d'un couvercle, les barres de liaison et la graisse.

Selon des modes particuliers de réalisation, le module comprend l'une ou plusieurs des caractéristiques suivantes :
- l'enveloppe comprend une paroi frangible adaptée pour rompre lors de la mise en place des barres de liaison sur les moyeux d'accouplement ;
- le module de liaison a une forme générale de section cylindrique, notamment demi-cylindrique, et l'enveloppe comprend une paroi extérieure et une paroi intérieure, et notamment la paroi intérieure étant la paroi frangible ;
- au moins l'une des parois extérieure ou intérieure comporte des creux, chaque creux s'étendant dans un espace entre deux barres de liaison adjacentes ;
- l'emballage comporte au moins une coque d'extrémité et une coque centrale, la coque d'extrémité étant plus rigide que l'enveloppe ; et
- les barres de liaison sont reliées par des portions de liaison, notamment coudées, et en ce que les barres de liaison et les portions de liaison forment un élément de liaison ondulée, notamment un élément de liaison d'une seule pièce.

L'invention a également pour objet un accouplement comprenant deux moyeux d'accouplements, **caractérisé en ce qu'il** comprend au moins un module de liaison tel que défini ci-dessus, et en ce que les barres de liaison relient en rotation les moyeux d'accouplement.

L'invention a également pour objet un procédé de fabrication d'un accouplement tel que défini ci-dessus, comprenant l'étape : mettre en place simultanément les barres de liaison sur les moyeux d'accouplement et la graisse entre les barres de liaison et les moyeux d'accouplement.

Selon des modes particuliers de réalisation, le procédé comporte la caractéristique suivante un module tel que défini ci-dessus, **caractérisé en ce que**, lors de la mise en place, la paroi frangible est rompue.

L'invention sera mieux comprise à la lecture de la description qui va suivre, donnée uniquement à titre d'exemple et faite en se référant aux dessins annexés, sur lesquels :
- la figure 1 est une vue en perspective partiellement arrachée d'un accouplement selon l'invention ;
- la figure 2 est une vue en perspective d'un module de liaison selon l'invention, partiellement arrachée ;
- la figure 3 est une vue en perspective d'un élément de liaison ondulé ;
- la figure 4 est une vue en perspective de l'élément de liaison ondulé de la figure 3 et de deux coques d'extrémité axiale ;
- la figure 5 est une vue en perspective de l'élément de liaison ondulé, des deux coques d'extrémité axiale et d'une coque axialement centrale ;
- la figure 6 est une vue analogue à celle de la figure 5, de la graisse étant intercalée entre les barres de liaison; et

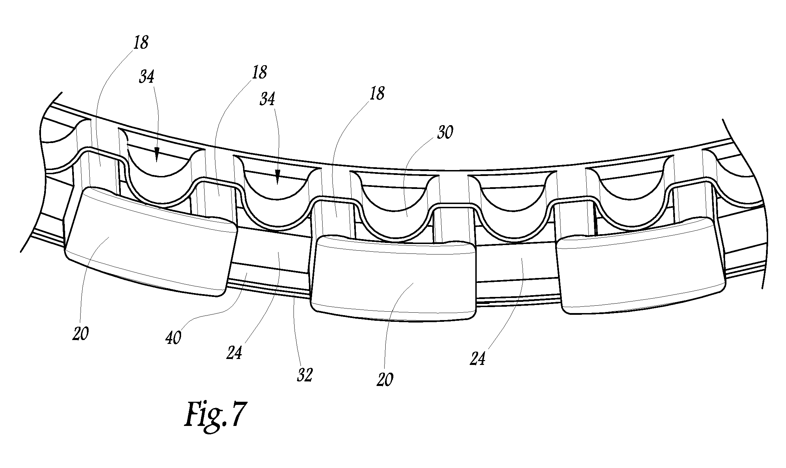

- la figure 7 est une vue agrandie de côté du détail VII de la figure 2.

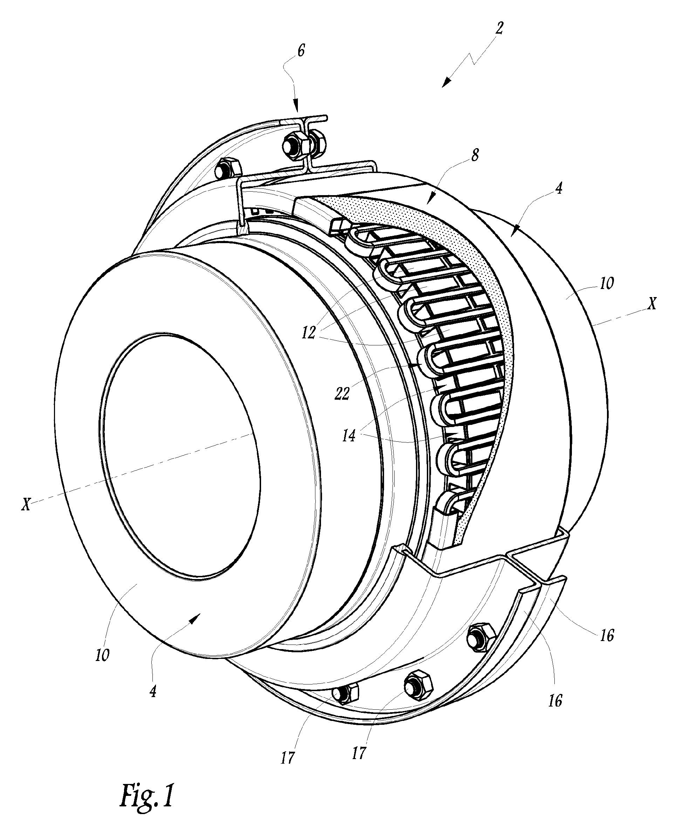

La figure 1 montre un accouplement selon l'invention, désigné par la référence générale 2.

L'accouplement 2 comprend deux moyeux d'accouplement 4, un couvercle 6, et deux modules de liaison 8. Dans ce qui suit un seul module de liaison 8 sera décrit, l'autre étant identique. L'accouplement 2 s'étend autour d'un axe central X-X. Les expressions « radialement », « axialement » et « circonférentiellement » seront utilisées dans ce qui suit par rapport à cet axe central X-X.

En variante, l'accouplement 2 peut comporter un seul module de liaison 8.

Chaque moyeu 4 comporte un corps de base cylindrique 10 et des saillies 12. Les saillies 12 s'étendent radialement par rapport à l'axe X-X. Chaque saillie 12 est de forme parallélépipède. Chaque saillie 12 comporte une extrémité axiale, qui est rétrécissant dans un sens d'étendant axialement vers le moyeu 4 adjacent. A chaque fois deux saillies 12 circonférentiellement adjacentes définissent un interstice 14 entre elles.

Les deux moyeux 4 sont identiques.

A l'état assemblé, les interstices 14 des deux moyeux 4 sont circonférentiellement alignés les uns avec les autres.

Le couvercle 6 comporte deux demi-couvercles 16 entourant le module de liaison 8, les saillies 12 et les interstices 14. Les deux demi-couvercles s'appliquent d'une manière étanche sur les deux corps de base 10. Les demi-couvercles 16 sont reliés entre eux par des boulons 17.

En l'occurrence, les deux demi-couvercles 16 sont de forme annulaire et séparées par un plan de séparation s'étendant perpendiculairement à l'axe central X-X. En variante, les demi-couvercles 16 sont de forme semi-annulaire et séparées par un plan de séparation s'étendant radialement par rapport à l'axe central X-X.

Le module de liaison 8 comprend une pluralité de barres de liaison 18. Les barres de liaison 18 sont fixées les unes aux autres par des portions de liaison coudées 20, ainsi formant un élément de liaison 22 ondulé. L'élément de liaison 22 est fabriqué de préférence d'une seule pièce et notamment en métal.

Les barres de liaison 18 sont de forme rectiligne. La section transversale des barres de liaison 18 peut être rectangulaire ou trapézoïdale.

Les barres de liaison 18 sont parallèles les unes des autres et s'étendent, à l'état monté du module de liaison, parallèlement à l'axe central X-X.

Le module de liaison 8 est en outre muni de la graisse 24 adaptée pour graisser la liaison entre la pluralité de barres de liaison 18 et les moyeux d'accouplement 4. A l'état non monté, la graisse 24 s'étend à chaque fois entre deux barres de liaison adjacentes 18.

Le module de liaison 8 comprend également un emballage 26 entourant l'élément de liaison 22 et la graisse 24 et notamment les barres de liaison 18. L'emballage 26 est, à l'état non monté sur le moyeu, étanche à la graisse. En conséquence, le module de liaison 8, en l'absence des moyeux d'accouplement 4, peut être manipulé d'un seul bloc sans que la graisse 24 s'échappe de l'emballage 26.

L'emballage 26 comprend une paroi frangible qui est adaptée pour rompre lors de la mise en place des barres de liaison 18, ou du module de liaison 8, sur les moyeux d'accouplement 4. De plus, la paroi frangible doit être rompue afin de mettre en place les barres de liaison 18 sur les moyeux d'accouplement 4. La paroi frangible est par exemple en matière plastique.

De préférence, la paroi frangible comporte des portions affaiblies, tel que d'épaisseur réduit, formant des emplacements de rupture.

En l'occurrence, le module de liaison 8 a une forme générale de cylindre creux autour de l'axe X-X, plus précisément une forme de demi-cylindre creux. Dans le cas où l'accouplement 2 comporte un seul module de liaison 8, le module de liaison 8 a une forme générale de cylindre creux qui s'étend sensiblement autour de 360°.

L'emballage 26 comprend une enveloppe 28 ayant une paroi intérieure 30 et une paroi extérieure 32. La paroi intérieure 30 est en l'occurrence la paroi frangible.

En l'occurrence, l'enveloppe 28, à l'état non monté sur le moyeu 4, est fermée d'une manière étanche à la graisse et est par exemple un sachet.

L'enveloppe 28 est en une matière plastique, telle que la matière plastique thermorétractable ou rétrécissable sous vide. Ainsi, l'enveloppe 28 épouse la forme des éléments à l'intérieur de cette enveloppe 28. L'enveloppe 28 peut être constituée d'un film. En variante, l'enveloppe 28 peut être constituée d'autres matières que de la matière plastique, par exemple un revêtement de scellement, notamment en paraffine.

Au moins l'une des parois extérieure 30 ou intérieure 32 comporte des creux 34 s'étendant à chaque fois dans un espace entre deux barres de liaison adjacentes 18. Ces creux 34 sont adaptés pour épouser les saillies 12 lors du montage et facilitent le positionnement de l'élément de liaison 22 par rapport aux moyeux 4. Les creux 34 sont avantageusement formés par le retrait de l'enveloppe 28 lors de l'application de vide ou de chaleur.

L'emballage 26 comprend également deux coques d'extrémité axiale 36, 38 et une coque axialement centrale 40. La coque d'extrémité 36, 38 est plus rigide que l'enveloppe 28. En l'occurrence, chaque coque d'extrémité axiale 36, 38 est constituée d'un profilé, notamment à section radiale en forme de C, recouvrant les portions de liaison 20. Chaque coque d'extrémité axiale 36, 38 est par exemple en matière plastique ou en métal.

Chaque coque d'extrémité axiale 36, 38 et les portions de liaison coudées 20 associées forment des réservoirs de graisse, recevant de la graisse supplémentaire. Ainsi un bon graissage de l'accouplement est assuré.

La coque axialement centrale 40 est une feuille cylindrique plus rigide que la paroi extérieure 32 de l'enveloppe 28. La coque axialement centrale 40 est en matière plastique. La coque axialement centrale 40 est appliquée sur la partie radialement extérieure des barres de liaison 18. La coque 40 est par exemple en tôle ou en matière plastique.

La coque axialement centrale 40 aide à repartir les forces de frappe sur l'élément de liaison 22 lors de la mise an place du module 8 sur les moyeux 4. La paroi extérieure 32 s'appliquant sur la coque axialement centrale 40 est suffisamment résistante pour ne pas rompre sous les forces nécessaires au montage du module 8 sur les moyeux 4, et notamment sous des coups de maillet.

En variante, les coques d'extrémité axiale 36, 38 et/ou la coque axialement centrale 40 peu(ven)t être omise(s).

L'enveloppe 28 entoure l'élément de liaison 22, la graisse 24, les coques d'extrémité axiale 36, 38 et la coque axialement centrale 40.

Le module de liaison 8 est fabriqué de la manière suivante ;

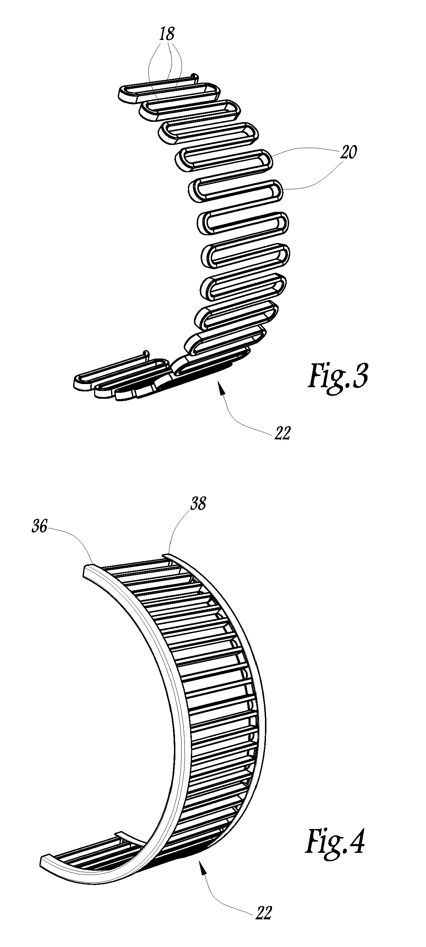

Tout d'abord l'élément de liaison 22 ondulé est fabriqué (voir figure 3).

Ensuite, les coques d'extrémité axiale 36, 38 sont enfichées sur les portions de liaison 20 (voir figure 4). Les extrémités circonférentielles des coques 36, 38 sont alignées avec les extrémités circonférentielles de l'élément de liaison 22.

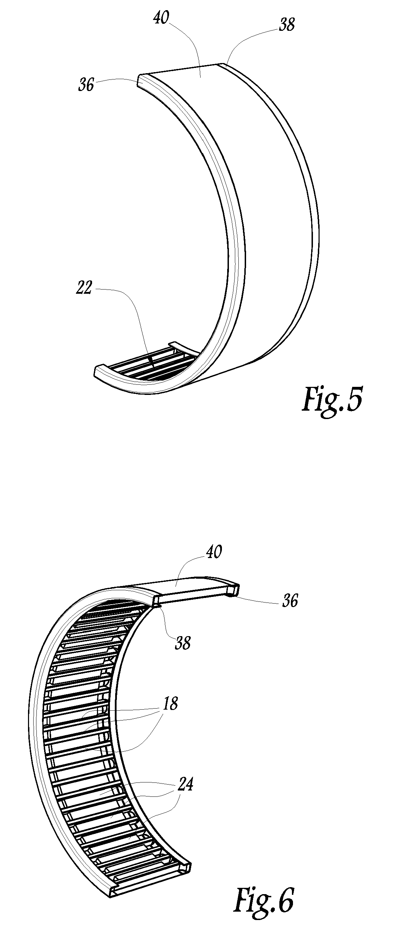

Ensuite, la coque axialement centrale 40 est disposée entre les coques 36, 38 et est alignée circonférentiellement avec les extrémités circonférentielles des coques 36, 38 et de l'élément de liaison 22 (voir figure 5).

Puis la graisse 24 est introduite dans l'interstice entre à chaque fois deux barres de liaison 18 adjacentes. Ensuite, l'enveloppe 28 est disposée autour de l'élément de liaison 22, de la graisse 24, des coques d'extrémité axiale 36, 38 et de la coque axialement centrale 40.

Ensuite, l'enveloppe 28 est soumise à un rétrécissement de sa matière, par exemple par application de chaleur ou par mise sous vide.

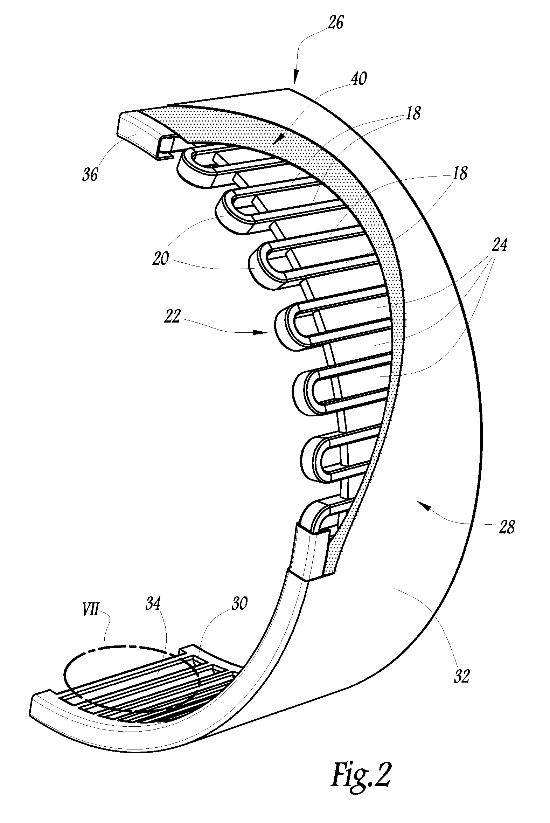

Enfin le module de liaison 8 prend la configuration montrée à la figure 2.

L'accouplement 2 de la figure 1 est fabriqué de la manière suivante en utilisant les modules de liaison 8.

Tout d'abord les deux moyeux 4 sont fabriqués et disposés de telle sorte que les deux moyeux 4 sont axialement alignés et que les interstices 14 sont circonférentiellement alignés.

Ensuite, dans le cas présent deux modules de liaison 8 sont appliqués sur les saillies 12 des deux moyeux 4, de telle sorte que les barres de liaison 18 soient enfichées dans tous les interstices 14 des deux moyeux 4.

Lors de cette disposition, la paroi frangible est rompue et la graisse 24 est introduite dans les interstices 14 simultanément avec les barres de liaison 18.

Enfin, le couvercle 6 est mis en place par-dessus le module de liaison 8.

Le module de liaison 8, l'accouplement 2 et son procédé de fabrication apportent les avantages suivants.

L'utilisateur de l'accouplement ne se procure et ne doit gérer qu'un seul type d'objet, à savoir le module de liaison 8 et non pas l'élément de liaison et la graisse séparément. De plus, le type de graisse, la qualité de la graisse et la quantité de la graisse est prédéterminée et adaptée aux besoins du fonctionnement de l'accouplement.

La mise en place du module de liaison 8 est propre et rapide. A ce sujet une étape de nettoyage d'outil de graissage est omise.

A titre auxiliaire, l'emballage peut également servir de support marketing ou de support technique contenant des indications techniques.

## Revendications

1. Module de liaison (8), du type comprenant :
- une pluralité de barres de liaison (18) adaptées pour relier deux moyeux d'accouplement,
- de la graisse (24) adaptée pour graisser la liaison entre la pluralité de barres de liaison (18) et les moyeux d'accouplement,
**caractérisé en ce que** le module de liaison (8) comprend un emballage (26) qui est muni d'une enveloppe (28) entourant d'une manière étanche à la graisse, notamment en l'absence des moyeux d'accouplement et/ou d'un couvercle, les barres de liaison et la graisse.

2. Module de liaison selon la revendication 1, **caractérisé en ce que** l'enveloppe (28) comprend une paroi frangible (30) adaptée pour rompre lors de la mise en place des barres de liaison sur les moyeux d'accouplement.

3. Module de liaison selon la revendication 1 ou 2, **caractérisé en ce que** le module de liaison (8) a une forme générale de section cylindrique, notamment demi-cylindrique, et l'enveloppe (28) comprend une paroi extérieure (32) et une paroi intérieure (30), et notamment la paroi intérieure étant la paroi frangible.

4. Module de liaison selon la revendication 3, **caractérisé en ce qu'**au moins l'une des parois extérieure (32) ou intérieure (30) comporte des creux (34), chaque creux s'étendant dans un espace entre deux barres de liaison adjacentes.

5. Module de liaison selon l'une quelconque des revendications précédentes, **caractérisé en ce que** l'emballage comporte au moins une coque d'extrémité (36, 38) et une coque centrale (40), la coque d'extrémité étant plus rigide que l'enveloppe (28).

6. Module de liaison selon l'une quelconque des revendications précédentes, **caractérisé en ce que** les barres de liaison (18) sont reliées par des portions de liaison (20), notamment coudées, et **en ce que** les barres de liaison (18) et les portions de liaison (20) forment un élément de liaison ondulée (22), notamment un élément de liaison d'une seule pièce.

7. Accouplement (2) comprenant deux moyeux d'accouplements (4), **caractérisé en ce qu'il** comprend au moins un module de liaison (8) selon l'une quelconque des revendications précédentes, et **en ce que** les barres de liaison (18) relient en rotation les moyeux d'accouplement (4).

8. Procédé de fabrication d'un accouplement selon la revendication 7, comprenant l'étape : mettre en place simultanément les barres de liaison (18) sur les moyeux d'accouplement (4) et la graisse (24) entre les barres de liaison (18) et les moyeux d'accouplement (4).

9. Procédé de fabrication d'un accouplement selon la revendication 8 comprenant un module selon la revendication 2, **caractérisé en ce que**, lors de la mise en place, la paroi frangible (28) est rompue.
